# EUROPEAN PATENT APPLICATION

(11) **EP 2 573 726 A1**
(43) Date of publication of application: **27.03.2013**
(21) Application number: 12185262.8
(22) Date of filing: 20.09.2012
(51) Int. Cl.: G06Q 30/02, G06F 17/30

(54) **Method and system for providing a cross-context optimal experience**

(30) Priority: 21.09.2011 EP 11182089
(71) Applicant: Koninklijke KPN N.V., 2516 CK The Hague (NL); Nederlandse Organisatie voor Toegepast -Natuurwetenschappelijk Onderzoek TNO, 2628 VK Delft (NL)
(72) Inventor: Havekes, Anton, 3122 VN Schiedam (NL); Klos, Victor, 2498 BV The Hague (NL); Prins, Martin, 2561 EN The Hague (NL); Doets, Peter-Jan, 2628 TG Delft (NL); van Steenbergen, Ate, 9737 NN Groningen (NL)

(57) **Abstract**

The disclosure relates to systems and methods for selecting content while incorporating different contextual information across a plurality of context domains. Suitable means of communication between at least two devices are described. The contextual information from the different contexts or domains may be applied (separately) to provide an improved user experience. In one embodiment, the contextual information from the plurality of domains may be applied to a plurality of contextaware decision processes. For instance, a first set of content items is selected using contextual information from a first domain. A second selection of content from the first set of content items is made using contextual information from a second, different domain.

## Description

### TECHNICAL FIELD

The invention relates to methods and systems for providing a cross-context optimal experience for a user of multiple content or service providing devices.

### BACKGROUND

Various user devices and systems employ context-aware computing to improve user experience. By having the ability to sense information about the user, the device, surroundings and/or history, context-driven technology affects and tailors the delivery of content and services in a way that is most suitable or beneficial for a particular situation. Generally, context-aware computing relates to devices and systems that sense information about the context and applies that information to the way how the user interacts with the devices and systems. A simple example of context-aware computing is the selection of an advertisement at an advertisement broker based on a user profile (e.g., age, sex, location, last query submitted), and delivering that selected advertisement to the user via a web page displayed through a web browser.

Selection of content that is provided to a user may be improved based on information gathered, measured, sensed, collected, extracted and/or derived from context. That information may also be used to influence the way a service (or used to select a particular type of service) is delivered to a user. Content refers to data associated with media such as audio, video, animations, images, sounds, haptic output, games, interactive media, etc. Types of services may refer to variations on a particular service, different packages of services, levels or quality of services, languages, style of service, attitude, etc. The assumption is that depending on the context, a context-aware decision process can apply the contextual information/data as an input to select or provide content or service that suits or is beneficial based on the context.

The information from the context generally is a representation of the semantic knowledge inferred from the context. Context may be related to one or more domains. A domain may be limited to information sensed or received via a particular device or service. A domain may be related to how fast the context changes. The information sensed from user context may relate to short term or long term information about the user context within a particular domain. For example, the information may represent long term interests of a user (e.g., a user profile). In another example, the information may represent short term information based on movement(s) detected by a user device.

Contextual information aids in improving the effectiveness of communication of content to a user. Contextual information can also aid in improving the effectiveness of a service provided to a user. In a sense, context enables methods and systems to decide what is the most suitable for a particular situation.

To facilitate processing of contextual information, a context may be represented through an ontology, e.g., by mapping raw data about user context to a defined set of values for a defined set of concepts. As such, the information associated with context in a particular domain may include an ontology that categorically and semantically describes different types of users. Based on the ontology, contextual information is applied to a decision process (e.g., as an input) to influence the content or service being provided to a user.

Users consume information and services via a multitude of user devices and systems, wherein each of the user devices and systems maintain user contexts from separate domains. Even when a user is using one particular device, information may be maintained (separately and/or differently) for a plurality of domains. Decision processes for using contextual information to affect content or service delivery are generally limited to using contextual information from a single domain or context. Known systems lack appropriate means to apply contextual information about a user across a plurality of devices, over different time periods, a plurality of contexts and/or a plurality of domains, to influence the service or content being delivered to or received by a user. Content or services are delivered and consumed with different user experiences to each device independently from each other, even though it is the same user consuming the content or service on multiple devices.

Therefore, there is a need in the art to improve the manner in which contextual information from a plurality of domains may be applied to select content that is to be provided to a user, even when the user is enjoying content from a plurality of devices across a plurality of domains or contexts. In other words, a need in the art exists to improve the manner of how contextual information from a plurality of domains or contexts may be applied to decision process(es) that influence user experience.

### SUMMARY

It is an object of the invention to improve known context aware computing systems. In a first aspect the invention may relate to a method for selection of a content item using first contextual data from a first context associated with a first module and second contextual data from a second context associated with a second module, and said second context being different from the first context. The method may comprise: transmitting a message from the second module to a first context-aware decision part remote from the second module to request a set of content items; receiving, at a second context-aware decision part, a set of content items from the first context-aware decision part, the set of content items being selected by first context-aware decision part based at least on the first contextual data; and selecting, by the second context-aware decision part, the content item from the set of content items, using at least the second contextual data.

The disclosure is directed to methods and systems for providing an improved user experience across different contexts, through applying contextual information from those contexts serially or incrementally to a plurality of context-aware decision processes. A context-aware decision process, for example selecting of content that is provided to a user, may be influenced by information gathered, measured, sensed, collected, extracted and/or derived from the plurality of domains of user context. That information may also affect or influence a different type of context-aware decision process, such as choosing a way that a service is delivered to a user.

The improved user experience may be created by applying information from different contexts, and applying the information serially or incrementally in a plurality of context-aware decision processes. For example, contextual information from multiple devices may improve user experience where what is happening on television (primary content consumed within primary context) can enrich web content shown on a tablet computer (secondary content consumed within secondary context). In this example, contextual information from the primary context may be used as an input to a first decision process for selecting a plurality of content items for the tablet computer. Then, the tablet computer may use the contextual information from the secondary context to select one from the plurality of content items to be shown on the tablet computer. Effectively, information from both the primary and secondary contexts are applied serially or incrementally such that the resulting user experience is improved based on the two contexts. One skilled in the art would appreciate that the information from both contexts may also be partially integrated and applied together in at least one of the context-aware decision processes.

An improved experience may be provided when the secondary content and the primary content are related and mutually beneficial. One skilled in the art would understand that a mismatch of content may also be beneficial. For instance, if showing a mismatch of content may provide an unexpected experience that provides a stronger impact on the user, or helps grab the attention of the user to the secondary content.

In the embodiments disclosed herein, one or more advantages is achieved by having contextual information applied serially or incrementally (e.g., separately), without having to integrate the contextual information from different contexts to form a set of information that jointly represents the plurality of contexts.

A first advantage is that by obviating the need to combine contextual information from different contexts, which are typically maintained using different ontologies or formats with taxonomies or vocabularies), the resulting methods and systems are simpler and easier to implement. One ontology used for a first context is likely to be incongruent or incompatible with another ontology, but the disclosed embodiments avoids the complexity of having to understand the relationship and effect each of the context have on each other to properly combine the information from different contexts in an integration process. Furthermore, the disclosed embodiments have the advantage where they no longer have the complexity of having to adapt the integration process when dynamic ontologies change.

A second advantage is that the resulting system enables proprietary systems of different content or service providers to work together without having to severely modify or open up the existing proprietary systems. The serial or incremental methods and systems of applying contextual information to the context-aware decision processes allow the proprietary systems to continue to separately manage contextual information. Furthermore, the contextual information is independently applied to context-aware decision processes. In other words, the content or service providers may reduce the need to modify or open up proprietary systems, but still jointly achieve a result that provides a cross-context experience leveraging contextual information from a plurality of contexts.

A third advantage is that the serial or incremental methods and systems substantially preserves the business interests of the various content or service providers. In some cases, certain content or services are chosen by the context-aware decision process due to certain business interests. For example, a particular advertisement may be chosen to be shown to a certain demographic for better revenue generation. In the disclosed embodiments, the content or service providers may separately apply contextual information to select content or provide service according to their own business interests and models.

A fourth advantage is that the serial or incremental methods and systems of applying contextual information from different contexts preserves privacy or ownership interests of contextual information. Information related to a context maintained by different content or service providers may be protected from being shared with or transmitted to another entity maintaining a different context. For instance, users may explicitly prohibit the sharing of information from the (local) context, such as real-time information about user activity, to an entity maintaining a (remote) context due to privacy concerns. In another instance, the contextual information from one context is owned by a particular entity and does not wish to share the contextual information with another entity managing information for another context. In these situations, the serial or incremental way of applying contextual information enables the information to be maintained and used separately thereby protecting the privacy or ownership of the contextual information, but yet both contexts are accounted for in the context-aware decision processes.

A domain of context may be based on a device or an application being used. Examples of different context domains may include: TV context, web browser context, web page contents context, computer operating system context, application context, device context, environment context, user context, profile context, etc. Some context domains may change more quickly than others, depending on the domain and the contextual information being collected. Some context domains may be more open (or anonymous) where as some other context domains are more personal or private.

A user is usually surrounded by or using various user devices or software modules on those user devices. In the context of this application, a module refers to either software components and/or hardware devices. Each of the various modules or devices may be related to a context domain(s). Context miner(s) may be used for one or more contexts to gather and manage contextual information about the user in the plurality of contexts. A context miner may be generally understood as modules configured to collect data from a certain context. The context miner modules may be implemented within the device or distributed at least partially outside the device. Preferably, a context miner infers from the collected data and derives contextual information about the context from the collected data. The contextual information may be represented by an ontology, e.g., using a taxonomy

To apply contextual information from a plurality of contexts without integrating them, one embodiment uses a multiple-step content selection process that applies the contextual information from the plurality of contexts serially or incrementally. A first set of content is chosen based on a first context. A second set of content is then selected from the first set of content based on a second context. As understood by one skilled in the art, further selection from the second set of content may be made based on further contexts and/or other selection criteria. In addition, content selection is merely one example of a context-aware decision process, thus, one skilled in the art may also apply contextual information in a decision process that influences the way a service is delivered.

Accordingly, the contextual information from the plurality of domains may be applied to a content selection process, such that content may be chosen for an improved user experience across a plurality of contexts. The contextual information from the plurality of contexts may be applied to a content selection process having a plurality of decision processes.

A method for selection of a content item using first contextual data from a first context associated with a first module and second contextual data from a second context associated with a second module is disclosed. Said second context is different from the first context.

Contexts and their corresponding contextual data may include filters or selection criteria that enables a context-aware decision module/part to pick out suitable content item(s) or service(s) for that particular context. Accordingly, contexts that are different from each other have different filtering behaviours. When one contextual data is applied to select a set of content items, subsequently applying contextual data from a different context to that set of content items would preferably narrow down the choices resulting in a subset of content items from that set of content items.

In this method, a message is transmitted from the second module to a first context-aware decision part remote from the second module to request a set of content items. In some embodiments, the message may be transmitted from or initiated by an entity different from the second module. Depending on the implementation, the message includes a request for content, information related to the request, and/or contextual data.

At a second context-aware decision part, a set of content items is received from the first context-aware decision part, the set of content items being selected by first context-aware decision part based at least on the first contextual data. The second context-aware decision part selects the content item from the set of content items, using at least the second contextual data. Context-aware decision parts may be configured to apply contextual data as filtering criteria for selecting content items.

As understood by one skilled in the art, alternative processes may be used for selecting the content item. The second context-aware decision part may first generate or select a set of content items based on the second contextual data. Said set of content items or identifiers thereof may then be transmitted to the first context-aware decision part. The first context-aware decision part may then select a content item from the set of content items. The selected content item may then be provided to the user through the first and/or second module. In these alternative embodiments, contextual data from two contexts are still applied in two context-aware decision processes, even though the function of the first and second context-aware decision parts have been modified.

In one embodiment, the first context-aware decision part is at least partially in the first module and/or the second context-aware decision part is at least partially in the second module. For instance, the context-aware decision parts are implemented in the modules, or may be distributed over a plurality of devices or modules. A context-aware decision part preferably takes contextual data and a collection of content items (or identifiers thereof) as inputs, and outputs at least one content item based on the filtering criteria in the contextual data. As one skilled in the art would appreciate, the context-aware decision part(s) may apply a similar process with the tailoring of services as well.

In one embodiment, the message further includes the second contextual data. The first set of content items are selected by the first context-aware decision part based further on at least part of the second contextual data related to the second context. If desired/permitted, at least part of the second contextual data may be passed onto the first context-aware decision part in the message to aid in the selection of the set of content items.

In one embodiment, the first set of content items are selected to substantially match the first context using at least the first contextual data and the content item from the set of content items is selected to substantially match the second context using at least the second contextual data. The matching may be performed by a selection criteria based on the contextual data. Preferably, the selected content items are selected to better suit the situation defined by the contextual data, such that better user experience may be provided.

In one embodiment, the first context-aware decision part is associated with an advertisement broker and the first set of content items are related to a plurality of advertisements. In another embodiment, the second module comprises a web browser configured to retrieve the content data associated with the selected content item and to enable the rendering of the retrieved content data on a display device.

In one embodiment, the first contextual data and/or the second contextual data is based on at least one of: user interest, user preferences, geographical information, personality, gender, age, history, habits, and identification of the user. These types of contexts and contextual data may be related to long-term information that change less frequently than others. In some embodiments, the first contextual data and or the second contextual data is based on at least one of: user activity on the first and/or second module, user activity in the surroundings of the first and/or second module, time of day, day of the week and/or month, and audio and/or video signal received from the surroundings of the first and/or second module. These types of contexts and contextual data may be more short-term, which change more frequently than others. Nonetheless, some contexts may include a hybrid of both long-term and short-term types of contexts, domains, and/or contextual information.

In one embodiment, the message further includes an indicator associated with an event on the first module, the indicator comprising a substantially unique identifier for the event, the unique identifier related to at least one content item that is selectable by the first context-aware decision part. For instance, the first module (e.g., a television) may detect an event in the broadcasting stream, and an indicator associated with that event may be transmitted in the message to aid in the first selection occurring in the first context-aware decision part. In some instances, the indicator may be part of the first or second contextual data. The first context-aware decision part may use the indicator or information associated with that indicator to filter for appropriate content items. In one embodiment, the indicator comprises a descriptor related to the event, the indicator corresponding to at least one content item that is selectable by the first context-aware decision part. For instance, the first context-aware decision part may have access to a database of content items that may include content items associated with the indicator.

A system for selection of a content item using first contextual data from a first context associated with a first module and second contextual data from a second context associated with a second module is also disclosed. Said second context is different from the first context. Said system comprises a communication module and a second context aware decision part. The communication module is configured to transmit a message from the second module to a first context-aware decision part remote from the second module to request a set of content items. The communication module is further configured to receive, a set of content items from the first context-aware decision part, the set of content items being selected by first context-aware decision part based at least on the first contextual data. A second context-aware decision part is configured to select, the content item from the set of content items, using at least the second contextual data.

In some embodiments, said system is further configured for performing the methods disclosed herein. In certain embodiments, the system comprises a first and second context miners for gathering or inferring the first and second contextual data from the first context and the second context, respectively. Context miners are systems and methods configured to collect contextual data from a particular context.

A method for enabling the selection of a content item using first contextual data from a first context associated with a first module and second contextual data from a second context associated with a second module is disclosed. Said second context is different from the first context. At the first context-aware decision part, a set of content items is selected based at least on the first contextual data. The set of content items is transmitted to a second-context-aware decision part, the second context-aware decision part being configured to select the content item from the set of content items using the second contextual data.

A computer program product is also disclosed, implemented on computer-readable non-transitory storage medium, the computer program product configured for, when run on a computer, executing the methods disclosed herein.

### BRIEF DESCRIPTION OF THE DRAWINGS

In the drawings:
**FIG. 1A** shows an illustrative example of different domains of user contexts.
**FIG. 1B** shows another illustrative example of different domains of user contexts.
**FIG. 2** is an exemplary flow diagram illustrating the selection of content based on different contexts.
**FIG. 3** is an illustrative communication flow diagram showing an exemplary method for retrieving a plurality of content items.
**FIG. 4** is an illustrative communication flow diagram showing an exemplary method for selecting a content item from a plurality of content items for an improved user experience.
**FIG. 5A** and **FIG. 5B** show exemplary methods for retrieving a list of content items, selecting the content item, and providing the content item to the user for an improved user experience.
**FIG. 6** shows an exemplary system diagram illustrating the components of the disclosed system(s) for improving user experience.

### DETAILED DESCRIPTION OF THE DRAWINGS

To provide an improved user experience, a plurality of contexts may be applied to context-aware decision processes such that (substantially optimal) content or service may be chosen and delivered to the user. However, context domains may involve different content delivery means (e.g., web-based on-demand delivery or traditional broadcast), accordingly, the contextual information from the different contexts may be different from each other in nature. In some cases, information from the different context domains cannot be combined easily without suitable means to technically communicate and combine the contextual information from the plurality of context domains. Furthermore, the business model associated with the different content delivery means may also be different. In other cases, information from a domain could not be shared easily with another domain or should not be shared with an external entity or party due to privacy or ownership issues.

Accordingly, it may be desirable for the content retrieval and selection process to fit with and/or utilize existing systems and business models as much as possible. Effective means for incorporating information from a plurality of contexts is desired, even though various contexts may be different from each other from a technical and/or business perspective. In the situation of advertising, different business models exists for value generation.

For traditional broadcasting, content packagers and providers create value by combining television shows, infotainment, movies, and other content into channels that fit a certain profile. Then, content packagers search advertisers that have an interest in consumers with that particular profile. In addition, users may have a paid subscription with a television broadcast service provider.

For web-based content delivery, at least two forms of value-generation exist. One is based on advertisements. Compelling content or services are offered for free, but part of the screen real estate may be used for displaying advertisement, which, when viewed (exposed) and/or clicked on, provide revenues for the content and/or service providers. Another one is based on paid-subscriptions. In this variant, access to content or services may be permitted if the user pays a fee or provide some value in return (monthly, weekly, one-short, etc.). Subscription model allows more flexibility and transparency for content pricing. For purposes of illustration, the disclosure applies the improved systems and methods on the advertisement-based (ad-based) model.

Ad-based model typically requires cooperation with two content providers: one who provides the data for the web content and another one who serves as an advertisement broker. The advertisement broker may maintain profiles of various users. Having a collection of advertisements, which may be associated with various advertisement campaigns, an advertisement broker selects a particular piece of advertisement for a particular user. The advertisement broker may provide a pointer to the advertisement to the browser, and the browser then fetches the data for that content item from the content provider who provides the data for the web content. However, this particular model for the selection of content is limited because the selection of the advertisement is only based on the user profile maintained by the advertisement broker, and does not take into account contextual information from other domains as one would desire.

For illustration, this disclosure considers an exemplary situation where a user has a plurality of electronic consumer devices. A plurality of contexts may exist and the content to be delivered to the user may be improved based on contextual information from those plurality of contexts. The user sits on the couch and the television (primary device) may be delivering a television program to the user. The primary device receives a data stream from a broadcaster. At some point of the television program, an actor enters a scene of the television program driving a car having "car model X" belonging to "car brand Y". At that point, an event associated with car model X belonging to car brand Y is detected by the television or set top box (e.g., television or multimedia equipment) in the data stream. Alternatively to having the television or set top box initiate and actively detect events in the stream, a different device may query or poll the television or some other suitable entity to see whether there is an event in the stream.

The user may be viewing a web page using a tablet computer, and the web page has available real estate for displaying content (e.g., an advertisement). Typically, unrelated content may be displayed in that available real estate. In some embodiments, the television may be able to synchronize the content being displayed on the television (e.g., the television program) with the content being displayed on the tablet computer. To inform the tablet computer of content being displayed on the television, the television equipment sends the event to the tablet computer. In other words, the tablet computer may know about the content being displayed on the television (e.g., via a message with an indicator associated with the content being displayed on the television), such that the tablet computer may display content that is related to the content being displayed on the television. The content being displayed on the tablet computer may be selected by a remote entity (e.g., an advertisement broker), and the selected content is directly provided to the user via the tablet computer without considering the user context more local to the user.

Content being shown through websites are often selected for a user based on a global context about the user (e.g., by matching content with user profile information tracked by web browser cookies). The global context about the user may include a user profile, which may maintain (slow-changing) information about the user, such as user interests or preference, gender, geographical location, job, age, etc. Accordingly, content such as advertisements are selected for a particular user based on a user profile maintained by a remote entity (e.g., web server, server equipment).

For example, the tablet computer, having information about the television program being displayed on the television (e.g., from the event), may transmit a message to an advertisement broker to request content. The advertisement broker, having a user profile of the user, may transmit an advertisement or a pointer thereto that fits the user profile and corresponds to the television program being displayed. That advertisement is then directly provided to the user through the tablet computer. If the advertisement includes an audio clip, and the user is watching the television with focus, the audio clip being played by the advertisement would annoy and distract the user. The advertisement being selected by the advertisement broker, without using contextual information about the user from other domains, may create an undesirable experience for the user.

In the above embodiments, contextual information from several contexts may provide insight for delivering content in a manner that improves user experience. One of the contexts may be associated with the television experience. For instance, contextual information from the television context or domain may include at least one of: the state of the television, the state of events in the television program being shown on the television, the state of the set top box, the state of the electronic programming guide, current user activity on the television, and an indicator associated with an event detected by the television (in the television data stream), etc. Another one of the context may be associated with the tablet computer. For instance, contextual information from the tablet computer context or domain may include at least one of: the state of the tablet computer, the state of the operating system on the table computer, the state of the web browser, the state of events in the content being shown through the web browser, and current user activity on the tablet computer, etc. Yet another context may include the environment near the tablet computer and/or the television, having contextual information about people in the household, state of other electronic devices in the household, the light level in the house, etc.

By combining contextual information from a plurality of domains of user context, content may be selected or the way a service is delivered may be influenced in a manner that improves user experience. As discussed in a previous example, playing an audio clip while the user is focused on watching a television program, may annoy the user and create a poor user experience or reduces user satisfaction. Note that a particular content item (e.g., advertisement having the audio clip) is selected by a remote server equipment (e.g., the advertisement broker) and that particular content item is provided to the user and directly consumed by the user. The particular content item may be selected based on a user profile that the advertisement broker had built up over time.

Rather than selecting the particular content item to be provided to the user, the disclosed embodiments comprises selecting a plurality of content items or references (e.g., universal resource locator) to the content items may be transmitted to the tablet computer. In this manner, the tablet computer may then select one content item from the plurality of content items using contextual information known to the tablet to improve the user experience. Effectively, contextual information from both the global context (e.g., user profile maintained by the advertisement broker) and the local context (e.g., tablet context) may be used in the selection of content.

To allow for other contextual information to influence the selection of content or the services to be provided to the user, a plurality of content items or types of services (rather than a single content item or a single type of service) may be selected and provided by the advertisement broker--enabling the tablet computer to make a further selection of content or service from the plurality of content items or services by applying further contextual information. For example, the tablet computer may use contextual information mined or gathered from the web browser on the tablet, such as information about the specific web page that the user is currently viewing, or the browsing history. Alternatively or additionally, the tablet computer may use contextual information from the tablet. The tablet may gather contextual information on user activity, and for example, infer from the signals collected by a microphone of the tablet whether the user is paying attention to the tablet.

Effectively, a first context is used as an input to a first context-aware decision process at the advertisement broker to select a first set of content or services. Then, a second context as well as the first set of content or services are used as inputs to make a further selection in a second context-aware decision process to select a second set of content or service. That second set of content or service, having been chosen on the basis of both the first and second contexts, is then provided to the user for consumption. In this case, the contextual information from the tablet did not have to be integrated or shared with the advertisement broker. Yet, the resulting user experience was improved using contextual information from both contexts.

The technical solution is explained further in light of the figures and various embodiments discussed herein. In general, the disclosure discusses methods and systems for selection and/or insertion of content or influencing the way a service is provided by applying contextual information from a plurality of contexts without having to integrate the contextual information from the contexts. A context may be associated with one or more domains. However, a simple example involves applying contextual information gathered by two user devices or modules (two domain) to a plurality of context-aware decision processes. The result is the selection of content or tailoring of a service that is performed on the basis of contextual information from both user devices/modules, thereby providing a beneficial cross-context experience.

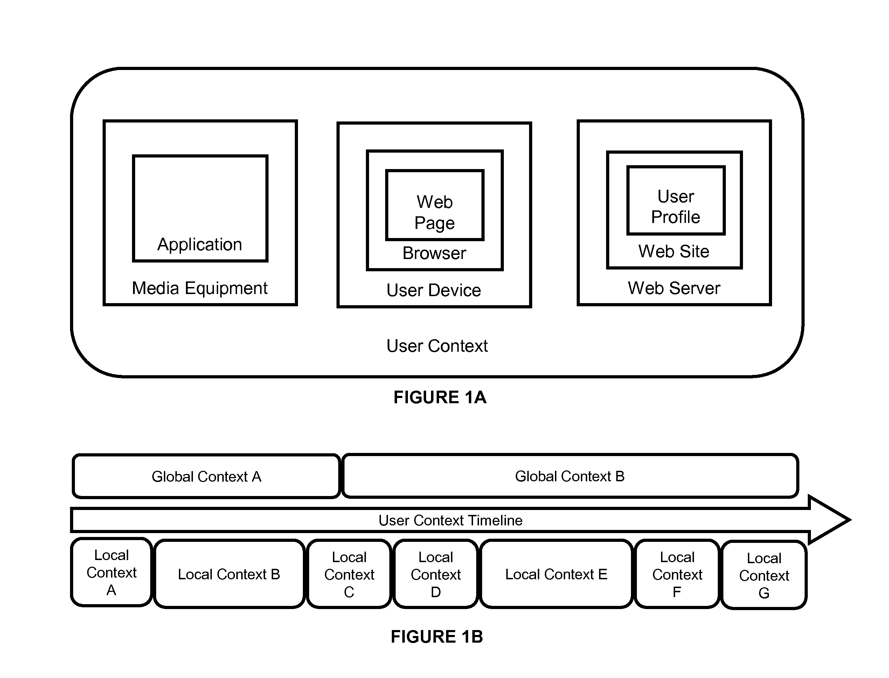

**FIG. 1A** shows an illustrative example of different domains of user contexts. Various user devices may have their own context, for instance, "media equipment", "user device" and "web server". Naturally, a plurality of devices may have a context miner that intelligently gathers information from each device to form single context (context being associated with more than one domain). The information from those contexts may be related to state of the device, applications running on the device, or the state of the surrounding area of the device. Examples of data may include information derived from the state of the device (e.g., signals from physical sensors like gyroscopes, the last time the device was idle), state of an application running on the device (e.g., values of variables used in a running application, user input signal activity, etc.) and information derived from the surroundings of the device (e.g., noise level detected from a microphone, movement level detected from a video camera, etc.).

The various user devices may also have running applications or modules that may maintain their own context within the user device, for instance, "application", "browser" and "web site". Naturally, a plurality of applications may have a context miner that intelligently gathers information from each application to form single context (context being associated with more than one domain). The applications running on the user devices may gather information about the user based on the user's activity and application data on those applications. For instance, information from those contexts may include data regarding how frequently the user interacted with the application, information inferred about the user based on the content consumed through those applications, etc.

Other domains may include "web page" or "user profile", based on a user's activity on those web pages and interaction with the web server. Naturally, a plurality of these domains may have a context miner that intelligently gathers information from each domain to form single context (context being associated with more than one domain). The contextual information derived from those domains may include data on the state of the web page, content of the web page, user activity with the web page, user activity with the server logged over a certain period of time, content of the queries/requests/responses transmitted to/from the web server.

The various domains of context in **FIG. 1A** may be connected through the user that uses them (denoted by "user context"). The definitions of the domains may be flexible and dependent on the particular desired application, the examples given are not meant to be limiting but merely exemplary.

In general, context may be defined as pieces of information that may be used to describe the situation of an entity (a person, a place, or an object with relevance for a user and her application). Examples of contextual information may include location, identify, role, time and activity, or derivations thereof.

Besides defining contexts based on the entity itself, some contexts may be defined based on how quickly the context changes. **FIG. 1B** shows another illustrative example of different domains of user contexts. Global context may tend to change slowly, like taste, friends, user profile, preferences, etc. In some embodiments, global context is gathered over longer periods of time and stored in the cloud. One example is user profile information derived from or referenced by web browser cookies. In contrast, local context may change frequently in a faster pace than global context. Local context may be associated with position, location, viewing angle, idle state, etc. Local context may be inferred and deduced over a substantially shorter period of time ("right here right now").

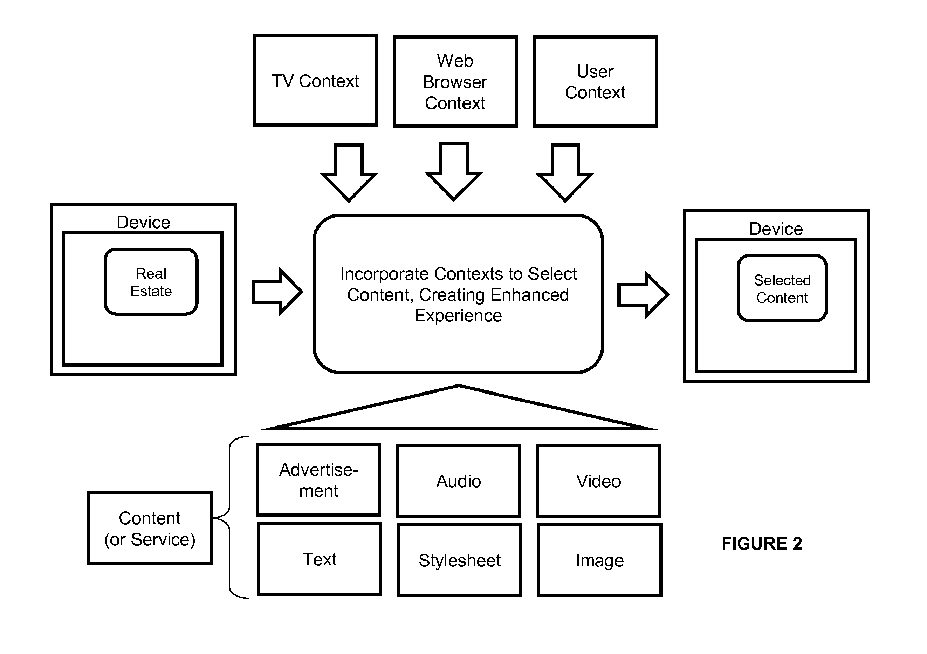

**FIG. 2** is an exemplary flow diagram illustrating the selection of content based on different contexts. The flow diagram and disclosure related to the selection of content is merely illustrative, one skilled in the art would understand that other types context-aware decision processes for tailoring a content or service may be used in place of the selection of content described herein.

A process may be configured to leverage information from a plurality of contexts to select suitable content for a user, such that an enhanced user experience may be created. The process may gather information from example contexts such as the television context, the web browser context, and the overall user context. The contextual information from the plurality of context or the derivation thereof may be used to select a subset of content items from a plurality of content items. The selection of a subset of content items from a plurality of content items is an example of a context-aware decision process whereby a decision is made on choosing content or service on the basis of contextual information from a context. If contextual information from a plurality of contexts are used to influence the user experience, the contextual information from each of the plurality of contexts may be serially or incrementally applied as inputs in at least two context-aware decision processes.

The plurality of content items may be associated with an advertisement, audio, video, text, stylesheet, and/or image. The piece of content or content item or type of service chosen on the basis on the plurality of contexts may then be inserted into the available real estate on the device or provided through the available real estate on the device.

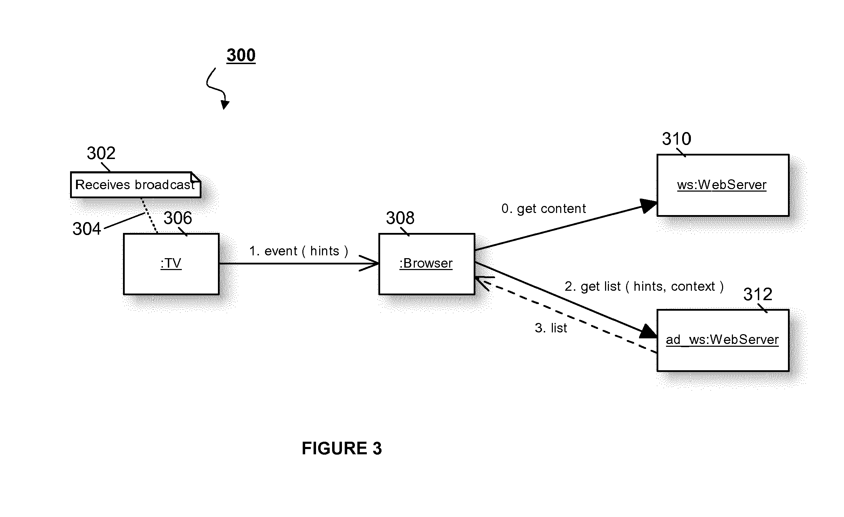

**FIG. 3** is an illustrative communication flow diagram showing an exemplary method for retrieving a plurality of content items. Naturally, this is applicable for retrieving data related to providing a service. Consider an exemplary situation where an advertiser starts a commercial campaign for a certain product or service. The advertiser may make a deal with a television broadcaster for commercial advertisements and cross-context optimal experience events. In addition, the advertiser may close a deal with an advertisement broker on the web. As part of the latter deal, a campaign ID (alternatively or additionally: tag, hash, or any identifier suitable for identifying the campaign) is established. In some embodiments, this same ID may be placed as part of hints included in the broadcasted cross-context optimal experience events. An example event is shown below:

| | | |
|---|---|---|
| <event name="The Voice of Holland"> | | |
| | <validity from="20:00" to="22:30" /> | |
| | <description>Final episode of the voice of Holland</description> | |
| | <campaign id="3470EYS8" /> | |
| | <hints> | |
| | | <hint priority="100">the voice of Holland</hint> |
| | | <hint>audi</hint> |
| | | <hint>gilette</hint> |
| | | <hint>king louis</hint> |
| | </hints> | |
| </event> | | |

As seen in exemplary system **300,** a system for selecting a content item from a plurality of content items may comprise television **306,** browser **308,** web server **310** and web server **312.** Television **306** is considered to be the primary device and browser **306** (on a tablet PC) is considered to be the secondary device. In this embodiment, television **306** may receive a data stream from a content provider (e.g., receives broadcast data **302** from a television broadcast provider, or some other form of content such as on demand). Within the data stream, an event listener of television **306** may detect an event in the data stream (e.g., a DSM-CC Do-it-now event, from ETSI TS 102 809 V1.1.1: digital Video Broadcasting (DVB); Signalling and carriage of interactive applications and services in Hybrid broadcast/broadband environments). An example event is shown above. In some embodiments, rather than having television **306** actively detect events in the data stream, another device may poll the television **306** to see if there is an event in the data stream.

The event preferably includes hints associated with the event. For example, hints may include a substantially unique identifier. The identifier may identify a particular advertisement campaign. The identifier may include data semantically describing the event. The identifier may include tags for labelling the event. Alternatively to including hints in the event, television **306** may direct the recipient of the message to request hints from a separate server. The hints enables the web server **312** to locate content items associated with the event (e.g., web server **312** stores content items in a relational database, where a content item is associated with at least one hint(s)). Web server may also select content items based on whether the user profile from the global context domain matches the hints provided in the event. The selection of content applying the hints and/or contextual information may be performed in a suitable context-aware decision module or part, located on the web server, or at television **306,** or in any suitable device.

In response to detecting the event in the data stream, an event dispatcher of television **306** may forward that event to at least one devices(s) in the home through a signalling mechanism. Examples of signalling mechanisms include UPnP event, Bonjour message, AJAX construct, etc. In the illustrative example, an event listener of the secondary device (e.g., tablet computer) may receive the event. The event listener may forward the event to an application, such as (web) browser **308.** The event may be forwarded to the currently displaying web page where the event is handled, for example, with the following piece of (JavaScript) code:

| | | |
|---|---|---|
| navigator.dvbEventing.onBroadcastEvent = function(e) { | | |
| | console.info ( | |
| | | "Received event on channel " + e.channel + " with hints " + e.hints ); |
| | // send query to ad broker | |
| | ... | |
| } | | |

In the above exemplary code fragment, an anonymous function may be configured to be called when a broadcast event is received by an event listener. The event itself may be passed into the function, and may have other possible parameters that could be given to the function. The portion "send query to ad broker" may include a piece of JavaScript code (supplied by the advertisement broker) for requesting a list of content items from web server **312.** The query portion preferably includes the hints from the detected event (see "get list" function in **Fig. 3****).** One skilled in the art would understand that the advertisement broker in this case serves as an entity for providing a list of content items, but any entity may be used as long as the entity is configured to provide the list of content items based on the identifier and/or any appropriate contextual information associated with the primary device. The list of content items may also be provided by the primary device, such as including a list of content items chosen based on the context of the primary device in the event message or the like.

In some embodiments, contextual information ("context" as seen in **FIG. 3****)** gathered by a context miner is optionally provided from browser **308** to web server **312.** The contextual information may be related to the browser domain and/or the television domain. The contextual information may be related to the local context, such as information on what the user is doing, etc. If the contextual information is passed on in the "get list" function, a content selector (e.g., advertisement selector) of web server **312** may integrate the contextual information in the web server's selection of content items to be returned to browser **308.** In other words, the web server selects content items based on the hints, the user profile (global context), as well as the contextual information from the local context. If contextual information from the local context has not been gathered yet, then context information may not be passed on to web server **312.**

In some situations where the local context is private, the contextual information from the local context would be prohibited from being passed on to web server **312.** The embodiment where context information is not passed on from browser **308** to web server **312** may be preferable in situations where the user of browser **308** wishes to protect his/her privacy (i.e., by preventing information about local context from leaking to an outside web server). However, in the alternate situation where (local) context information is passed on from browser **308** to web server **312,** perhaps at the expense of user privacy, web server **312** may retrieve a better-fitting list of content items based on the contextual information (e.g., in combination with a campaign ID or other tags/hints from the event).

Upon receiving the query from web browser **308,** a content selector (i.e., context-aware decision module/part) of web server **312** may select a list of content items based on at least one of: hints, local context (if available), and global contextual information about the user. A context miner of web server **312** may keep track of a user profile of the user using television **306** and browser **308.** An exemplary context miner may gather data from user activity such as usage events, identity of the content being consumed on television **306** and browser **308,** etc. From the gathered data, the context miner may derive or infer contextual information about the context associated with television **306** and/or browser **308** according to a particular ontology. The contextual information is stored in a user profile. The user profile may provide contextual information about the global user context, which may include slow changing information about the user such as preferences and tastes. Accordingly, web server **312** returns a list of content items that substantially matches the user profile (i.e., context domain), thereby improving user experience. Alternatively, the web server **312** may be bypassed if the primary device maintains the user profile, and television **306** alternatively provides the list of content items chosen based on that user profile.

Web server **312** (e.g., an advertisement broker) could return a single content item to be directly provided to the user. Although the content item chosen by web server **312** may match well with the profile of the user (i.e., global context), it does not take into account contextual information from other contexts (e.g., local context). Accordingly, the improved methods and systems in this disclosure alleviate this issue by taking into account contextual information from other context. The technical solution disclosed allows browser **308** to select the content item (using a content selector or context-aware decision module/part) to be provided to the user from a plurality of content items received from web server **312** (or television **306,** or any suitable entity that had chosen the list of content items based on a first context) and to take into account local context (second context) in that selection. As one skilled in the art would appreciate, the technical solution may extend to other devices configured to apply contextual information from another context to the multi-step selection process such that contextual information across a plurality of domains may be leveraged.

In this situation where a user is using a secondary device in addition to watching television **306,** contextual information from other context domains may include local contextual information such as user activity on the tablet, user activity in the home, time of day, signals from the microphone or video camera, gyroscopes, accelerometers, etc. The contextual information may be gathered using at least one context miner(s).

A content item from the list of content items may include information such as a substantially unique identifier identifying the content item, a universal resource locator (URL), tag(s) describing the content item, and the content item itself such as audio, video, image, animation, length of the content, any suitable characteristics describing the content, etc. The information corresponding to the content items in the list enables a content selector (i.e., a context-aware decision process) to make a selection from the plurality of content items by matching contextual information with the corresponding information. If instead of content items, the context-aware decision process tailors a service to fit with a particular context, the different types of or packages of services would also be associated with any of the above information. The corresponding information about the individual content items or services provides information to browser **308** to select content or service that substantially best fits with the context.

In some embodiments, after receiving the list of content items, browser **308** may apply contextual information from the local context (e.g., information mined by a context miner about the user using television **306** and browser **308)** to select at least one content item from the list of content items received from web server **312.** The at least one content item is selected such that the selected content item substantially matches the context domain, thereby further improving user experience.

If the data corresponding to the selected content item is not provided in the list returned from web server **312** (i.e., but rather a pointer to the content item is returned in the list), browser **308** may retrieve the data corresponding to the content item ("get content") from web server **310** (which may or may not be part of web server **312).** The retrieved data may then be rendered and displayed through browser **308** on the tablet computer.

In some embodiments, a selection process is applied at web server **312** to find a list of content items that substantially best matches (or most mismatch) the user in one context. Furthermore, another selection process is applied at browser **308** to find at least one content item from that list of content items that substantially best matches the user in another context. If one wishes to leverage information from further context domains, one skilled in the art would appreciate that further selection processes may be applied.

In general, gathering contextual information about a user in a context domain relates to "context awareness", which is a study within computer science. Context awareness allows solutions to apply information gathered from a particular situation to improve user experience in a context-aware decision process. A context-aware decision process makes use of the contextual information and applies the contextual information to select content or decide what service is most beneficial to the context. For instance, a content selection process may choose one of a plurality of content items as the optimal content item based on the contextual information (e.g., blue image is chosen instead of a red image). The optimal content may be chosen based on a high score calculated between the content and the contextual information. Likewise, a service tailoring process may decide how the service or what service (i.e., the optimal service) should be delivered to a user based on the contextual information (e.g., a user is provided with 5 questions in a questionnaire rather than 2 questions). The optimal service may be chosen based on a high score calculated between the service and the contextual information. If a mismatch is desired, naturally, a different content or service may be selected based on a low score.

In some embodiments, user context information, i.e., gathered by a context miner, may be simplified (e.g., to facilitate data process) to adhere to some kind of semantic agreement or ontology. To determine matches between content items and the user context, distance calculations between the content items and the user context may be done using vectors (i.e., determining which content item fits closest to the user context). Rule-based matching methods may alternatively or additionally be applied in the context-aware decision process(es). As one skilled in the art would appreciate, other suitable matching methods may be used for finding content that matches a particular context.

Several techniques from the field of artificial intelligence may be applicable to the context-aware decision process in matching user contexts with content items. For example, fuzzy logic, genetic algorithms, rule-based systems and combinations thereof may be used. In certain embodiments, the context-aware decision problem may fall into the category of "learning to rank" problems. The context-aware decision may leverage even information provided in the detected event in the broadcast stream. In some embodiments, the context-aware decision process may apply other algorithms to filter or derive other data from the contextual information gathered from the context miner for use in the context-aware decision process.

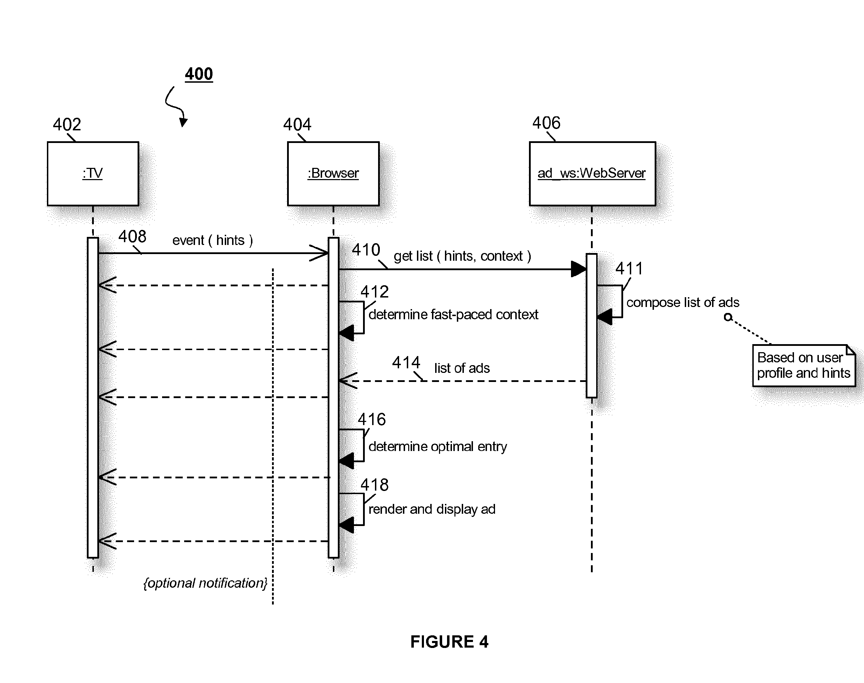

To further illustrate the timing of the various messages exchanged, **FIG. 4** shows an illustrative communication flow diagram showing an exemplary method for selecting a content item from a plurality of content items for an improved user experience. The exemplary system **400** for selecting a content item from a plurality of content items include television **402,** browser **404** and web server **406.** At communication **408,** an event, preferably with hints, is transmitted from an event dispatcher of television **402** to and event listener of browser **404** (i.e., an application running on the secondary device), in response to detecting an event in a data stream (by an event listener in tele-television **402,** for example). In some embodiments, a campaign ID may be part of the hints.

In response to receiving the event with hints, browser **404** may transmit a "get list" message to web server **406.** The get list message may include hints, which allows a content selector of web server **406** to compose a list of content items (advertisements, arrow **411)** based on the hints or a derivation of the hints. For instance, web server **406** may search for content items that are associated with a particular campaign ID. Web server **406** may maintain a user profile (i.e., based on a slow changing global user context) associated with the user using browser **404** (by means of a context miner and/or browser cookies). Accordingly, a content selector of web server **406** composes a list of content items (advertisements) based on the hints in the event as well as the user profile. The selection of content items during composing step **411** effectively applies contextual information from the global context to improve user experience. The content selector of web server may be referred to as a context-aware decision module/part.

The message "get list" may optionally include contextual information from the local context domain of the user (e.g., related to browser **404** and/or television **402).** If contextual information from the local contextual domain is included in the "get list" message, then content selector of web server **406** may optionally apply the contextual information in the message to compose a better-fitting list of content items.

In some embodiments, a context miner of browser **404** determines the local context at arrow **412.** The process of context mining may occur concurrently as an on-going process while other communications are being transmitted and/received. The process of context mining may also occur after the list of content items are received in response to the "get list" message (i.e., after receipt of message **414).** Once the content items have been selected by web server **406** and the list is composed, the list is forwarded in message **414** from web server **406** to browser **404.** Using contextual information from the local context (e.g., fast-paced context), a content selector of browser **404** may determine a substantially optimal entry (content item). The content item (e.g., advertisement) may then be rendered and displayed by browser **404.** The content selector of browser **404** may be referred to as a context-aware decision module/part. In the alternative, if the optimal entry is a pointer to the content item, browser **404** may contact a server to retrieve the data corresponding to the content item such that the content item may be rendered and displayed.

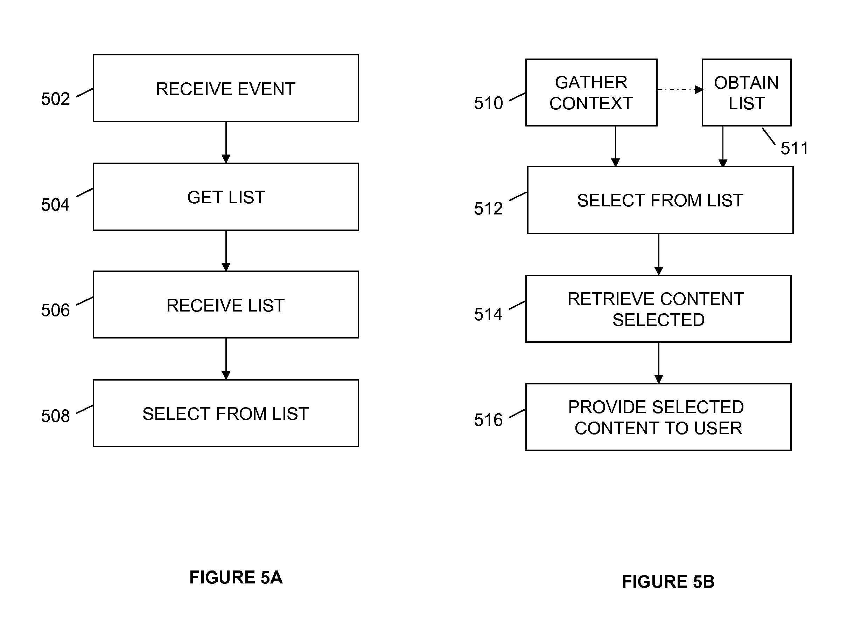

**FIG. 5A** and **FIG. 5B** show exemplary methods for retrieving a list of content items, selecting the content item, and providing the content item to the user for an improved user experience. The process in **FIG. 5A** generalizes the method performed by the secondary device such that the content item selected from the plurality of content items is selected to improve user experience. The improved user experience is provided by applying contextual information from a plurality of contexts in the content selection process.

At step **502,** an event is received from the primary device (e.g., a television). Using information provided in the event, such as hints and campaign IDs), the secondary device transmits a get list message at step **504** to a web server. After step **504,** a list of content items are received from the web server at step **506.** The list of content items had been chosen by the web server using at least one of: information provided in the event and contextual information maintained by web server about the user. The secondary device then selects at least one content item from the received list at step **508,** by applying contextual information maintained by the secondary device.

**Fig. 5B** illustrates exemplary sub-processes that occur for the content to be selected for the user. At step **510,** a context miner of the secondary device gathers information about the local context of the user. In the mean time, the secondary device may query a web server to obtain a list of content items at step **511.** The list of content items may have been previously selected by the web server based on information from the global context as well as any applicable hints in a cross-context experience event detected by a primary device. Although not shown here, the event may have been forwarded from the primary device to the web server via the secondary device.

By applying contextual information gathered from a domain different from the global domain, at least one content item is selected from the list of content items at step **512** on the secondary device. At this stage, the selection of content is made dependent on information from a plurality of context domains. In embodiments where the content data itself is not provided in the content list but rather a pointer to the content is provided, the secondary device retrieves the selected content from a (web) server which stores the content data at step **514.** Once received, the content data corresponding to the selected content is provided to the user at step **516.** In embodiments where the content data itself is provided in the content list, then the content data is provided to the user at step **516.**

Using the methods and systems disclosed above, an improved user experience may be provided. A user that owns a television and tablet computer that supports the disclosed methods and systems may enjoy the benefits of having content delivered on the tablet computer that is better fitted for or takes into account both the global and local context of the user. The user may linger on the couch, browsing away on the tablet. After a while the user may be in a voice chat. The tablet computer may then receive an event with hints and/or a campaign ID (associated with car model X of car maker Y). The information in the event or the event itself, and information from the global context may be used to query an advertisement broker for a list of content items. In the mean time, the tablet computer may determine that the user is in a voice chat but not with the user's complete attention (i.e., local context information, gathered from the state of the tablet and/or microphone/camera information). An advertisement for car model X of car maker Y may be playing on the television. Having synchronization capabilities, the tablet also plays the same advertisement for car model X of car maker Y but in a discrete manner without audio or intrusive animations. Due to the (local) contextual information provided from the current voice chat, the browser selects a discreet advertisement rather than displaying a loud and more attention grabbing video to distract the user from the current voice chat. Accordingly, user experience may be improved by taking into account global and local context information about the user.

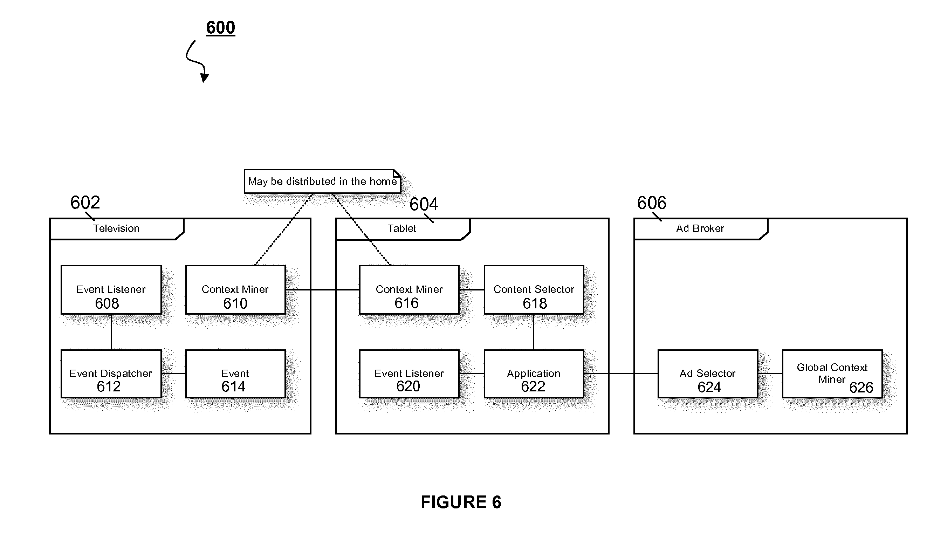

**FIG. 6** shows an exemplary system diagram illustrating the components of the disclosed system(s) for improving user experience. The general system includes a primary device (e.g., television **602),** a secondary device (e.g., tablet **604)** and server equipment (e.g., ad broker **606).** Television **602** (the exemplary primary device) may include event listener **608,** which may be configured to scan the received data stream for events. When an event is detected, event listener **608** may notify event dispatcher **612.** Event dispatcher **612** may then transmit event **614** to event listener **620** of tablet **604,** wirelessly or wired, over some IP protocol or over a non-IP protocol.

Once event listener **620** receives the event, event listener **620** forwards the event to application **622** (e.g., a browser) running on tablet **604.** The application may be activated upon event listener **620** detecting an event at tablet **604.** Application **622** may include multiple layers of application in itself. For example, when a browser application include multiple web 2.0 pages, which are also applications themselves. The term application is not meant to be limiting to just one application, but merely to refer to module(s) running on a tablet that enables content to be provided to a user via some available screen real estate (e.g., as seen in **FIG. 2****).**

Application **622,** upon receiving the event from event listener **620** may send a message to advertisement broker **606** to request a list of content items. Ad selector **624** of advertisement broker **606** may select a list of content items using information provided by global context miner **626.** Ad selector **624** may be referred to as a context-aware decision module/part. As one skilled in the art would understand that global context miner **626** may not reside completely with advertisement broker **606,** but may reside at least partially with other parties not shown in **FIG. 6****.**

Application **622** may receive the content items list from ad selector **624** and may forward the list of content items to content selector **618** for further content selection. Applying contextual information from context miner **610** and context miner **616** (whose processes for mining or deriving contextual information may reside at least partially in tablet **604** television **602,** and/or somewhere distributed in the home, and/or delegated to other applications that directly or indirectly monitor user activity), content selector **618** selects one or more content items. The content item may then be provided to the user via the user interface of tablet **604.** As such, contextual information from a plurality of contexts is leveraged by applying the contextual information from the contexts in a plurality of context-aware decision processes.

Although the disclosure focuses on an implementation that leverages existing web advertising models (e.g., the use of an ad broker on a web server), one skilled in the art would appreciate that other suitable methods and systems may be used. For example, rather than contacting an ad broker for a list of content items, the event detected in the stream may already have a list of content items. The list of content items may have already been chosen based on global context maintained for that user by the television content provider. In other words, the event itself includes the list of content items that would otherwise be retrieved from the advertisement broker.

| | | |
|---|---|---|
| <event name="The Voice of Holland" > | | |
| | <validity> | |
| | | <from>20:00</from> |
| | | <to>22:00</to> |
| | </validity> | |
| | <description>Final episode of the voice of Holland</description> | |
| | <options select="single"> | |
| | | <option priority="10" type="screenshot" url="http://dvb.com/tvoh.jpg"/> |
| | | <option priority="20" type="video"url="http://www.tvoh.nl/stream.mp4" /> |
| | | <option priority="20" type="audio"url="http://www.tvoh.nl/stream.mp4" /> |
| | | <option priority="40" type="ad"url="http://ad.dvb.localhost.com/dvbAD.html" /> |
| | | <option priority="1" type="color">red</option> |
| | | <option priority="1" type="stylesheet"url="http://www.tvoh.nl/impact.css" /> |
| | | <option priority="1" type="website"url="http://www.thevoiceofholland.nl/dvb" /> |
| | | <option priority="1" type="app" url="http://www.tv.com/8DHhs34" /> |
| | </options> | |
| </event> | | |

Besides semantic information related to the event (e.g., textual description of the event), timing information may also be provided in the event. For instance, the event may provide timing parameters for configuring when the tailored content should be displayed on the secondary device. Examples of parameters may include: "show content between now and 10 minutes from now", "show content at 10 seconds after audio stops", "when user stops scrolling", "when user loses attention", "when the browser tab regains focus", "show at discretion of browser any time before 22:00", "show content for full duration of 10 minutes", etc.

Although a television and a tablet computer has been discussed extensively through the disclosure, one skilled in the art that any computing device, such as media devices, consumer devices, distributed systems, etc., may be used as the primary or secondary device, as long as the device enables content to be consumed by a user.

Content may include at least one of audio, visual content, interactive content, content involving some other form of sensory output, or a combination thereof. Thus, the primary device may not have a display. For instance, a radio may be used. Rather than a web browser on the tablet computer, other runtime environment or application may be used, e.g., a flash application, standalone application, widget, mobile application, and so on. Although the embodiments disclosed relate to a single user using a plurality of devices, multiple users may also be using the device. Accordingly, the context for that multi-user device may be associated with a plurality of users (e.g., consider a television screen displayed at a sports bar).

In some embodiments, the roles of the primary and secondary devices may be swapped or their functions may be mixed. For example, the television may offer real estate to a web site/content being shown on the tablet. The broadcaster may signal or announce to the tablet that it can offer real-estate, for instance, space to display an advertisement at a specific time slot. Having interchangeable roles, the primary and second device could be cooperative instead of having a master-slave (or client/server) approach.

Hybrid, blended user experiences may be created when contextual information from a plurality of context domains are exchanged and/or at least partially mixed and applied to the content selection processes in manners disclosed herein. For instance, at least part of contextual information in the various contexts may be exchanged between the primary device, secondary device, and/or web server. Moreover, the devices may optionally provide feedback information to each other. For example, the secondary device may provide feedback to the television regarding the content selection process or the expected result to be shown (and when the result will be shown), such that the television could refer to the current content (e.g., "as can be seen on your tablet now").

The embodiments describe a secondary device requesting and receiving a list of content items selected based on the context associated with the primary device. Alternatively to selecting from that list of content items at the secondary device, the secondary device can provide the contextual information associated with the secondary device to the primary device such that the primary device can select from that list of content items. In addition, some embodiments may use the secondary device first to apply the contextual information associated with the secondary device to create the list of content items. That list of content items may be provided to the primary device, and the primary device may then apply contextual information associated with the primary device to select the content item to be provided to the user. That selected content item may be provided to the user via the primary and/or the secondary device.

One embodiment of the disclosure may be implemented as a program product/module for use with a computer system and/or a processor/module of a computer system. The program(s) of the program product/module define functions of the embodiments (including the methods described herein) and can be included on a variety of computer-readable non-transitory storage media. The computer-readable storage media can be a non-transitory storage medium. Illustrative computer-readable and/or non-transitory storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive, flash memory, or any type of solid-state random-access semiconductor memory) on which alterable information is stored. Moreover, the disclosure is not limited to the embodiments described above, which may be varied within the scope of the accompanying claims without departing from the scope of the disclosure.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method for selection of a content item using first contextual data from a first context associated with a first module and second contextual data from a second context associated with a second module, and said second context being different from the first context, the method comprising:
transmitting a message from the second module to a first context-aware decision part remote from the second module to request a set of content items;
receiving, at a second context-aware decision part, a set of content items from the first context-aware decision part, the set of content items being selected by first context-aware decision part based at least on the first contextual data; and
selecting, by the second context-aware decision part, the content item from the set of content items, using at least the second contextual data.

2. The method of claim 1, further comprising:
the first context-aware decision part is at least partially in the first module; and/or
the second context-aware decision part is at least partially in the second module.

3. The method of claim 1 or claim 2, wherein:
the message further includes the second contextual data; and
the first set of content items are selected by the first context-aware decision part based further on at least part of the second contextual data related to the second context.

4. The method of any of claims 1-3, wherein:
the first set of content items are selected to substantially match the first context using at least the first contextual data; and
the content item from the set of content items is selected to substantially match the second context using at least the second contextual data.

5. The method of any of claims 1-4, wherein the first context-aware decision part is associated with an advertisement broker and the first set of content items are related to a plurality of advertisements.

6. The method of any of claims 1-5, wherein:
the second module comprises a web browser configured to retrieve the content data associated with the selected content item and to enable the rendering of the retrieved content data on a display device.

7. The method of any of claims 1-6, wherein the first contextual data and/or the second contextual data is based on at least one of: user interest, user preferences, geographical information, personality, gender, age, history, habits, and identification of the user.

8. The method of any of claims 1-7, wherein the first contextual data and or the second contextual data is based on at least one of: user activity on the first and/or second module, user activity in the surroundings of the first and/or second module, time of day, day of the week and/or month, and audio and/or video signal received from the surroundings of the first and/or second module.

9. The method of any of claims 1-8, wherein the message further includes an indicator associated with an event on the first module, the indicator comprising a substantially unique identifier for the event, the unique identifier related to at least one content item that is selectable by the first context-aware decision part.

10. The method of any of claims 9, wherein the indicator comprises a descriptor related to the event, the indicator corresponding to at least one content item that is selectable by the first context-aware decision part.

11. A system for selection of a content item using first contextual data from a first context associated with a first module and second contextual data from a second context associated with a second module, and said second context being different from the first context, the system comprising:
a communication module configured to transmit a message from the second module to a first context-aware decision part remote from the second module to request a set of content items;
the communication module further configured to receive, a set of content items from the first context-aware decision part, the set of content items being selected by first context-aware decision part based at least on the first contextual data; and
a second context-aware decision part configured to select, the content item from the set of content items, using at least the second contextual data.

12. The system according to claim 11, further configured for performing the method according to one or more of the claims 2-10.

13. The system according to claim 11 or 12, further comprising a first and second context miners for gathering or inferring the first and second contextual data from the first context and the second context, respectively.

14. A method for enabling the selection of a content item using first contextual data from a first context associated with a first module and second contextual data from a second context associated with a second module, and said second context being different from the first context, the method comprising:
selecting, at the first context-aware decision part, a set of content items based at least on the first contextual data; and
transmitting the set of content items to a second-context-aware decision part, the second context-aware decision part being configured to select the content item from the set of content items using the second contextual data.

15. A computer program product, implemented on computer-readable non-transitory storage medium, the computer program product configured for, when run on a computer, executing the method steps according to any one of the claims 1-10 and 14.
